# EUROPEAN PATENT APPLICATION

(11) **EP 3 901 573 A1**
(43) Date of publication of application: **27.10.2021**
(21) Application number: 18943392.3
(22) Date of filing: 17.12.2018
(51) Int. Cl.: G01B 21/00, G01B 11/30

(54) **INFORMATION PROCESSING DEVICE AND MOBILE ROBOT**

(71) Applicant: Chiba Institute of Technology, Narashino-shi, Chiba 275-0016 (JP)
(72) Inventor: YOSHIDA Tomoaki, Narashino-shi, Chiba 275-0016 (JP); FURUTA Takayuki, Narashino-shi, Chiba 275-0016 (JP); YAMATO Hideaki, Narashino-shi, Chiba 275-0016 (JP); IRIE Kiyoshi, Narashino-shi, Chiba 275-0016 (JP); MATSUZAWA Takaaki, Narashino-shi, Chiba 275-0016 (JP); SHIMIZU Masaharu, Narashino-shi, Chiba 275-0016 (JP)
(74) Representative: Stöckeler, Ferdinand
(86) International application number: PCT/JP2018/046320
(87) International publication number: WO 2020/129120

(57) **Abstract**

[Problem] An information apparatus and a mobile robot are provided which can increase detection accuracy for detecting a change in an environment with the travel of a mobile unit. [Solving Means] A mobile robot 1 includes: a control means 2 for controlling the drive of each unit of a robot body 1A; a detection means 3 for detecting a target object around the robot body 1A; and a travel means 4 for moving the robot body 1A. The control means 2 determines a change in the environment by: obtaining two first measurement value groups S11 and S12 obtained by detecting the distances to different positions P1 and P2 in an environment at intervals of a predetermined time with the travel of the mobile robot 1; and processing the first measurement value groups, generating two second measurement value groups S21 and S22 according to the travel distance of the mobile robot 1, and comparing the generated second measurement value groups S21 and S22.

## Description

### TECHNICAL FIELD

The present invention relates to an information processing apparatus and a mobile robot.

### BACKGROUND ART

Various mobile robots that can travel autonomously, such as service robots and home robots, or more specifically cleaning robots, security robots, transport robots, guide robots, nursing care robots, and agricultural robots, are conventionally and commercially practical. For example, a mobile robot that travels autonomously along a floor surface in a travelling environment generally includes a distance sensor that measures the distance to a target object such as the floor surface or an obstacle to detect, for example, an obstacle and a level difference, which are present in the travelling environment. Distance measurement systems using such a distance sensor have been proposed (refer to, for example, Patent Literature 1).

A distance measurement system (information processing apparatus) described in Patent Literature 1 includes a robot body (mobile unit) that can travel with drive wheels along the floor surface, a distance sensor (distance measuring sensor) that measures the distance to a target object ahead in a travel direction of the robot body, and a control device that controls a drive unit of the drive wheel on the basis of a measurement result of the distance sensor. The distance sensor includes a first close-range distance measuring sensor and a second long-range distance measuring sensor, and is configured in such a manner as to integrate distance data measured by each sensor and increase the measurement area ahead in the travel direction.

### CITATION LIST

### PATENT LITERATURE

Patent Literature 1: JP-A-2014-21625

### SUMMARY OF THE INVENTION

### PROBLEMS TO BE SOLVED BY THE INVENTION

A conceivable technique for measuring the distance to a target object with a distance sensor and detecting changes in the environment such as an obstacle and a level difference is assuming environmental change patterns appearing in measurement values of the distance sensor and presetting thresholds obtained by converting the environmental change patterns into a numerical form. Even if such thresholds are preset, the environmental change patterns are manifold and influenced by, for example, the travel speed, travel distance, and attitude change of the mobile unit. Accordingly, a further improvement is being desired to increase the accuracy of detecting a change in the environment.

An object of the present invention is to provide an information processing apparatus and mobile robot that can increase detection accuracy for detecting a change in an environment with the travel of a mobile unit.

### SOLUTIONS TO THE PROBLEMS

An information processing apparatus of the present invention is an information processing apparatus that processes travel information of a mobile unit moving in an environment is characterized by a determination means configured to determine a change in the environment by: obtaining a plurality of first measurement value groups obtained by detecting distances to different positions in the environment at intervals of a predetermined time with the travel of the mobile unit; and processing the plurality of first measurement value groups, generating a plurality of second measurement value groups according to the travel distance of the mobile unit, and comparing the plurality of second measurement value groups generated.

According to such a present invention, the determination means processes the plurality of first measurement value groups detected at intervals of the predetermined time, generates the plurality of second measurement value groups, compares the plurality of second measurement value groups generated according to the travel distance of the mobile unit, and determines a change in the environment. Accordingly, it is possible to reduce the influence of, for example, the travel speed of the mobile unit and to increase the accuracy of detecting a change in the environment.

In the present invention, it is preferable that the determination means perform interpolations between measurement values of the plurality of first measurement value groups, on the basis of measured distance values obtained by detecting the travel distances of the mobile unit, and resample the measurement values into values per travel distance to generate the plurality of second measurement value groups.

The first measurement value groups are sample values detected at intervals of the predetermined time. Accordingly, if the speed of the mobile unit changes during the detection, the intervals between the detection positions corresponding to the measurement values of the first measurement value groups vary.

According to such a configuration, the determination means performs interpolations between the measurement values of the first measurement value groups on the basis of the measured distance values obtained by detecting the travel distances of the mobile unit, and resamples the measurement values into values per travel distance, and generates the second measurement value groups. Accordingly, it is possible to obtain the second measurement value groups where the positions of the mobile unit that moves in the environment are appropriately reflected and to further increase the accuracy of detecting a change in the environment.

In the present invention, it is preferable that, on the basis of a learning model where a weighting factor is preset by learning, the determination means input the plurality of second measurement value groups into the learning model, and obtain the presence or absence of a change in the environment as an output.

In the determination method of the present invention where a change in the environment is determined on the basis of the first measurement value groups being the sample values that are detected while the mobile unit is travelling, it is expected that measurement conditions change in various manners due to, for example, a change in the travelling condition of the mobile unit and the displacement of, for example, an obstacle. Accordingly, it is difficult to preset thresholds obtained by converting environmental change patterns into a numerical form.

In contrast, according to such a configuration, the determination means obtains the presence or absence of a change in the environment as an output on the basis of the learning model where the weighting factor is preset by learning. Accordingly, it is possible to support various environmental change patterns.

Moreover, the second measurement value groups have a higher affinity for the learning model than the first measurement value groups influenced by, for example, the travel speed of the mobile unit. The determination means of the present invention inputs the second measurement value groups into the learning model and obtains the presence or absence of a change in the environment as an output. Accordingly, it is possible to obtain an excellent determination result as compared to a case where the first measurement value groups are inputted directly into the learning model to obtain the presence or absence of a change in the environment as an output. At this point in time, an appropriate learning model such as a learning model using a neural network or a deep learning model can be employed.

In the present invention, it is preferable that the determination means compare the plurality of second measurement value groups and execute learning for determining a change in the environment to set the weighting factor for the learning model.

According to such a configuration, the determination means compares the plurality of second measurement value groups and executes learning for determining a change in the environment to set the weighting factor for the learning model. Accordingly, it is possible to support various environmental change patterns.

A mobile robot of the present invention includes: the information processing apparatus according to any of the above paragraphs; a travel means configured to move the mobile unit; first and second distance sensors configured to detect distances to two different positions in the environment as different positions in the environment; and a control means configured to control the first and the second distance sensors and function as the determination means, in which a second position detected by the second distance sensor is set at a position closer to the mobile unit along a travel direction of the mobile unit than a first position detected by the first distance sensor.

According to such a mobile robot of the present invention, as in the above-mentioned information processing apparatus, the second measurement value groups according to the travel distance of the mobile are compared to determine a change in the environment. Accordingly, it is possible to reduce the influence of, for example, the travel speed of the mobile unit and increase the accuracy of detecting a change in the environment. Moreover, the first distance sensor detects the distance to the first position ahead along the travel direction of the mobile unit, and the second distance sensor detects the distance to the second position behind the first position. Consequently, two first measurement value groups are obtained. Accordingly, it is possible to ensure the detection of a change in the environment appearing ahead during the travel of the mobile unit. Therefore, the mobile robot (mobile unit) can appropriately make a judgement to avoid or climb over, for example, an obstacle or a level difference while travelling.

In the present invention, it is preferable that the control means include: a distance change acquisition unit configured to acquire changes in the distances to the first and second positions detected by the first and second distance sensors; a distance change comparison unit configured to compare the changes in the distances to the first and second positions acquired by the distance change acquisition unit; and a distance change distinguishing unit configured to distinguish between changes in the distances caused by a change in the attitude of the mobile unit and changes in the distances caused by a change in the environment, on the basis of a result of the comparison by the distance change comparison unit.

According to such a configuration, the distance change distinguishing unit distinguishes between changes in the distances caused by a change in the attitude of the mobile unit (changes in the same phase) and changes in the distances caused by a change in the environment (such as an obstacle or level difference) (changes having a phase difference). Accordingly, the control means (determination means) can detect a change in the environment correctly on the basis of changes in the distances caused by a change in the environment, excluding changes in the distances caused by a change in the attitude of the mobile unit. Therefore, it is possible to reduce the influence of a change in the attitude of the mobile unit on the measurement values of the first measurement value group and to increase measurement accuracy. Consequently, it is possible to further increase the accuracy of detecting a change in the environment.

### BRIEF DESCRIPTION OF THE DRAWINGS

Fig. 1 is a side view of a mobile robot according to one embodiment of the present invention.
Fig. 2 is a plan view of the mobile robot.
Fig. 3 is a block diagram of the mobile robot.
Figs. 4(A) to 4(D) are diagrams illustrating the operations of the mobile robot.
Figs. 5(A) to 5(C) are conceptual diagrams illustrating measurement information by the mobile robot.
Figs. 6(A) to 6(C) are conceptual diagrams illustrating measurement information based on a change in the attitude of the mobile robot.
Fig. 7 is a flowchart illustrating a processing procedure of an information processing apparatus in the mobile robot.
Figs. 8(A) and 8(B) are diagrams illustrating a height adjustment operation of the mobile robot.
Fig. 9 is a conceptual diagram illustrating a measurement operation of the mobile robot.
Figs. 10(A) and 10(B) are conceptual diagrams illustrating the measurement operation of the mobile robot, the speed of which is different from Fig. 9.
Figs. 11(A) and 11(B) are graphs illustrating first measurement value groups obtained by the measurement operation.
Fig. 12 is a graph illustrating second measurement value groups generated by processing the first measurement value groups.
Fig. 13 is a diagram illustrating a procedure for comparing the second measurement value groups and determining a change in an environment.
Fig. 14 is a plan view illustrating a modification of the mobile robot.
Fig. 15 is a side view illustrating another modification of the mobile robot.

### DESCRIPTION OF THE EMBODIMENTS

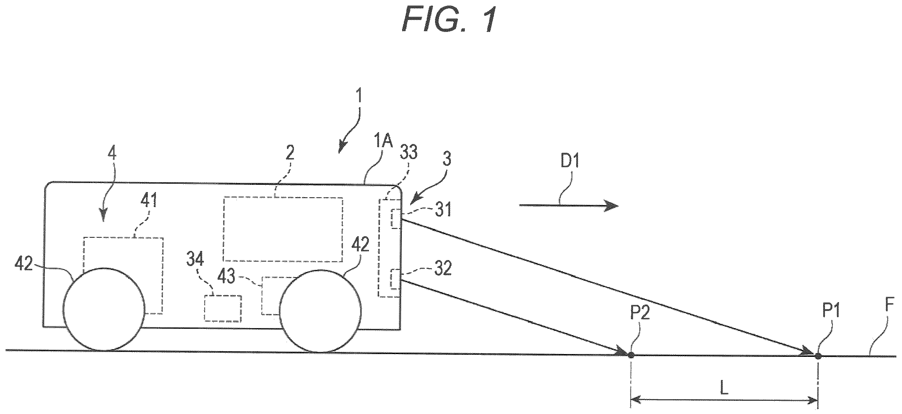

One embodiment of the present invention is described hereinafter on the basis of Figs. 1 to 13.

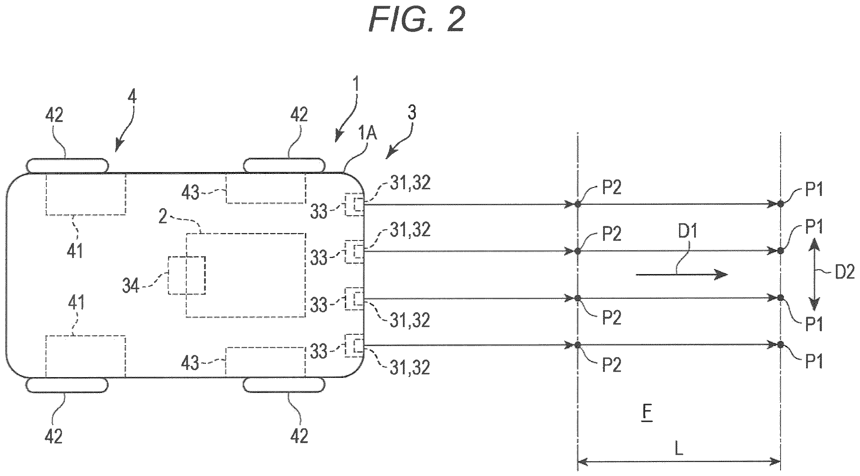

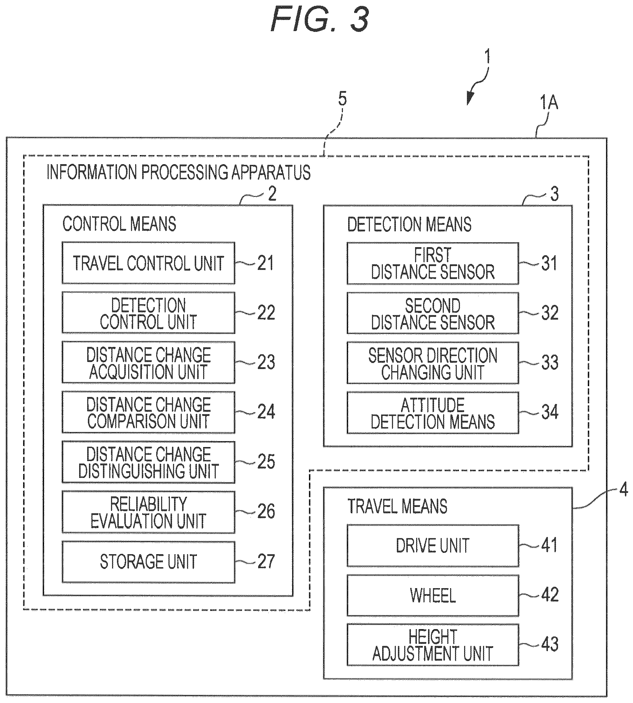

Fig. 1 is a side view of a mobile robot according to one embodiment of the present invention. Fig. 2 is a plan view of the mobile robot. Fig. 3 is a block diagram of the mobile robot. As illustrated in Figs. 1 to 3, a mobile robot 1 includes, for example, a robot body 1A as a mobile unit that travels along a floor surface F being a predetermined surface in a room (environment), a control means 2 for controlling the drive of each unit of the robot body 1A for autonomous travel, a detection means 3 for detecting a target object around the robot body 1A and the attitude of the robot body 1A, and a travel means 4 for moving the robot body 1A. Moreover, as illustrated in Fig. 3, the control means 2 and the detection means 3 configure an information processing apparatus 5 that processes travel information of the mobile robot 1.

The control means 2 includes a computing means such as a CPU and a storage means such as ROM and RAM, and is for controlling the operation of the robot body 1A. As illustrated in Fig. 3, the control means 2 includes a travel control unit 21 for controlling the drive of the travel means 4, a detection control unit 22 for controlling the drive of the detection means 3, a distance change acquisition unit 23, a distance change comparison unit 24, a distance change distinguishing unit 25, and a reliability evaluation unit 26 for processing the travel information of the mobile robot 1 as described below, and a storage unit 27 for storing various programs and data.

The detection means 3 includes, for example, first distance sensors 31 and second distance sensors 32, which are front sensors provided at the front of the robot body 1A, a sensor direction changing unit 33 that changes the direction in which the distance sensors 31 and 32 detect the distance, and an attitude detection means 34 for detecting the attitude of the robot body 1A. A plurality of the first distance sensors 31 and a plurality of the second distance sensors 32 are provided at the front of the robot body 1A to measure the distance to a target object ahead of the robot body 1A. The first distance sensors 31 and the second distance sensors 32 include, for example, a laser rangefinder that applies a laser beam such as an infrared laser beam and measures the distance. The sensor direction changing unit 33 rotates the first distance sensors 31 and the second distance sensors 32 upward and downward to change the laser beam application direction. The attitude detection means 34 includes, for example, an acceleration sensor, and detects, for example, the inclination of the robot body 1A from a horizontal surface.

As illustrated in Figs. 1 and 2, the plurality of the first distance sensors 31 detects the distance to a first position P1 on the floor surface F ahead in a travel direction D1 of the robot body 1A. The plurality of the second distance sensors 32 detects the distance to a second position P2 on the floor surface F ahead in the trave direction D1. Moreover, the pluralities of the first distance sensors 31 and the second distance sensors 32 detect the distances to a plurality of the first positions P1 and a plurality of the second positions P2, which are set along an intersection direction D2 intersecting with the travel direction D1 of the robot body 1A, as illustrated in Fig. 2. The second position P2 is set at a position closer to the robot body 1A than the first position P1 along the travel direction D1 of the robot body 1A. A distance difference L on the flat floor surface F between the first position P1 and the second position P2 is set at a predetermined value. The second distance sensor 32 has lower resolution than the first distance sensor 31. In other words, the first distance sensor 31 includes a sensor with high (fine) distance resolution, and the second distance sensor 32 includes a sensor with lower (coarse) distance resolution than the first distance sensor 31.

The travel means 4 includes a drive unit 41 having, for example, a motor, four wheels 42 at the front left and right and the rear left and right, and a height adjustment unit 43 that changes the height of the front wheels to adjust the height of the robot body 1A. The drive unit 41 rotationally drives the rear left and right wheels 42 independently to cause the robot body 1A to travel forward or backward, or change direction. The height adjustment unit 43 displaces the front left and right wheels 42 upward and downward to adjust the height of the robot body 1A.

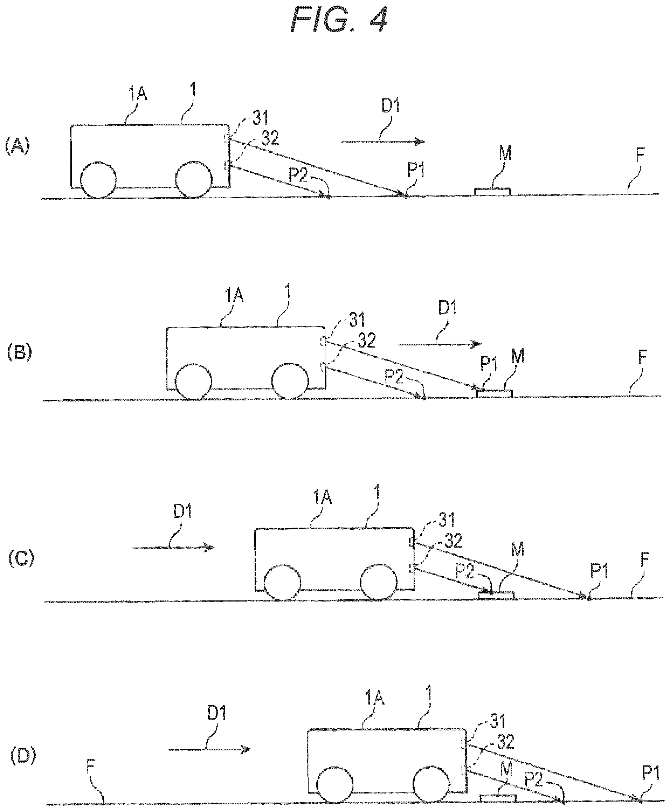

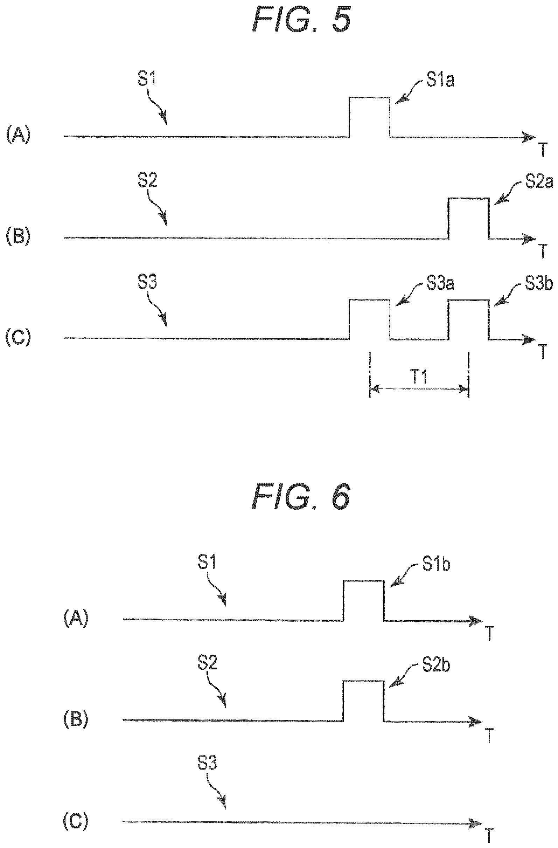

Figs. 4(A) to 4(D) are diagrams illustrating the operations of the mobile robot. Figs. 5(A) to 5(C) are conceptual diagrams illustrating measurement information by the mobile robot. When the mobile robot 1 is travelling forward in the travel direction D1 along the floor surface F as illustrated in Fig. 4(A), the first distance sensor 31 detects the distance to the first position P1 on the floor surface F, and the second distance sensor 32 detects the distance to the second position P2 on the floor surface F. The measurement data of the first distance sensor 31 is transmitted to the distance change acquisition unit 23 of the control means 2. The distance change acquisition unit 23 acquires a change in the distance to the floor surface F, and stores a first change value S1 based on the distance change on a time-series basis in the storage unit 27 as illustrated in Fig. 5(A). The measurement data of the second distance sensor 32 is transmitted to the distance change acquisition unit 23. The distance change acquisition unit 23 acquires a change in the distance to the floor surface F, and stores a second change value S2 based on the distance change on a time-series basis in the storage unit 27 as illustrated in Fig. 5(B). At this point in time, if the floor surface F is flat, there are no changes in either of the change values S1 and S2 (in other words, the change values S1 and S2 are zero), or only minute values appear in the change values S1 and S2.

Next, if there is an object M on the floor surface F ahead in the travel direction D1 of the mobile robot 1 as illustrated in Fig. 4(B), when the first position P1 reaches the object M and the first distance sensor 31 detects the distance to the object M, the distance change acquisition unit 23 acquires a change in the distance which has been reduced as compared to the distance to the floor surface F as illustrated in Fig. 5(A), and stores the change as a first change value S1a in the storage unit 27. Furthermore, when the second position P2 reaches the object M and the second distance sensor 32 detects the distance to the object M as illustrated in Fig. 4(C), the distance change acquisition unit 23 acquires a change in the distance which has been reduced as compared to the distance to the floor surface F as illustrated in Fig. 5(B), and stores the change as a second change value S2a in the storage unit 27. At this point in time, when the first position P1 reaches over the object M, the distance to the floor surface F is measured by the first distance sensor 31. Accordingly, the first change value S1 becomes zero or a minute value again. Furthermore, when the second position P2 reaches over the object M as illustrated in Fig. 4(D), the second change value S2 becomes zero or a minute value again.

The first change value S1 and the second change value S2 are obtained in this manner. The distance change comparison unit 24 of the control means 2 then compares the first change value S1 and the second change value S2. The comparison method by the distance change comparison unit 24 is, for example, to calculate a difference value S3 obtained by taking a difference between the first change value S1 and the second change value S2 and then calculate a time difference T1 between a first difference value S3a and a second difference value S3b, which remain in the difference value S3 as illustrated in Fig. 5(C). The distance change distinguishing unit 25 distinguishes between changes in the distances caused by a change in the attitude of the mobile robot 1 (changes in the same phase) and changes in the distances caused by the shape of the floor surface F (changes having a phase difference), on the basis of the difference value S3 between the first change value S1 and the second change value S2, which have been compared by the distance change comparison unit 24. Specifically, if the first difference value S3a and the second difference value S3b are values equal to or greater than a predetermined threshold, and the resulting time difference T1 is a time difference (phase difference) according to the speed of the mobile robot 1, the distance change distinguishing unit 25 determines that the change values S1a and S2a are changes in the distances caused by the shape of the floor surface F (that is, the object M). The time difference according to the speed of the mobile robot 1 is a time difference obtained by dividing the distance difference L between the first position P1 and the second position P2 by the speed of the mobile robot 1.

On the other hand, a case illustrated in Figs. 6(A) to 6(C) can be exemplified as changes in the distances caused by a change in the attitude of the mobile robot 1. Figs. 6(A) to 6(C) are conceptual diagrams illustrating measurement information based on a change in the attitude of the mobile robot. Fig. 6(A) illustrates the change value S1 of the distance to the floor surface F, which is acquired by the distance change acquisition unit 23, on the basis of the distance to the first position P1 on the floor surface F, which is detected by the first distance sensor 31. Fig. 6(B) illustrates the change value S2 of the distance to the floor surface F, which is acquired by the distance change acquisition unit 23, on the basis of the distance to the second position P2 on the floor surface F, which is detected by the second distance sensor 32. If change values S1b and S2b occur at substantially the same time, the difference value S3 being the difference between the first change value S1 and the second change value S2, which is calculated by the distance change comparison unit 24, is nearly zero as illustrated in Fig. 6(C). If the difference value S3 is nearly zero in this manner, the distance change distinguishing unit 25 determines that there is no time difference (phase difference) between the occurrence of the change values S1b and S2b, and that the change values S1b and S2b are changes in the distances caused not by the shape of the floor surface F but by a change in the attitude of the mobile robot 1.

Moreover, the attitude detection means 34 of the detection means 3 detects a change in the attitude of the mobile robot 1. In other words, if the wheels 42 the robot body 1A vibrates, or shakes as if inclining backwards and forwards or from side to side relative to the floor surface F due to, for example, small irregularities on the floor surface F, the joint of wooden floor boards or tiles, and a carpet level difference, the attitude detection means 34 detects a change in the attitude due to, for example, the vibration, inclination, or shaking and then transmits the change to the detection control unit 22. When the change in the attitude of the robot body 1A is detected in this manner, the reliability evaluation unit 26 of the control means 2 evaluates the reliability of the first change value S1 and the second change value S2, which have been acquired by the distance change acquisition unit 23. Furthermore, the distance change comparison unit 24 determines whether or not to compare the first change value S1 and the second change value S2 on the basis of the evaluation result of the reliability evaluation unit 26. In other words, if the reliability evaluation unit 26 evaluates that the change values S1 and S2 at this point in time are not reliable, a comparison by the distance change comparison unit 24 between the first change value S1 and the second change value S2 such as mentioned above is not made.

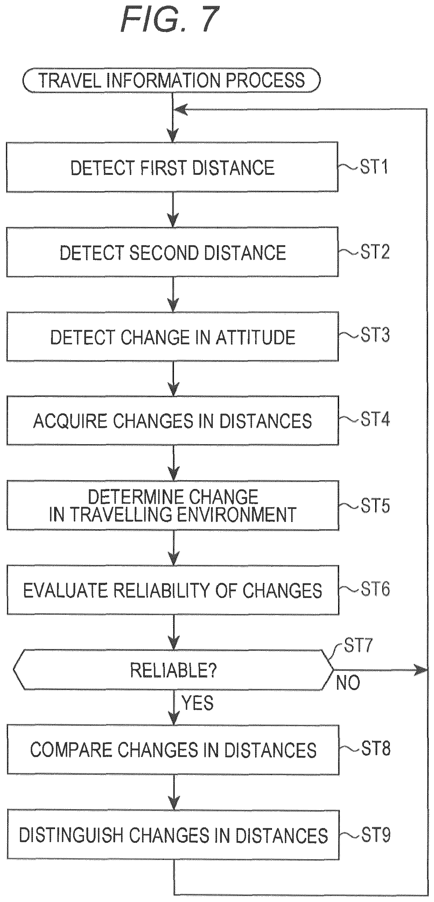

The procedure of processing the travel information of the mobile robot 1 by the information processing apparatus 5 (the control means 2 and the detection means 3) as described above is described also with Fig. 7. Fig. 7 is a flowchart illustrating a processing procedure of the information processing apparatus in the mobile robot. The information processing apparatus 5 repeats steps ST1 to ST9 illustrated in Fig. 7 at predetermined intervals (for example, short intervals of approximately 0.1 seconds) to process the travel information of the mobile robot 1.

When the control means 2 starts a travel information process while the mobile robot 1 is travelling, the detection control unit 22 causes the first distance sensor 31 to detect the distance to the first position P1 (a first distance detection process: step ST1), and causes the second distance sensor 32 to detect the distance to the second position P2 (a second distance detection process: step ST2). Moreover, the detection control unit 22 causes the attitude detection means 34 to detect a change in the attitude of the robot body 1A (an attitude change detection process: step ST3). When the distances to the first position P1 and the second position P2 are detected in the distance detection processes (steps ST1 and ST2), the distance change acquisition unit 23 acquires changes in the distances to the floor surface F, and stores the change values S1 and S2 in the storage unit 27 (a distance change acquisition process: step ST4). Furthermore, the distance change acquisition unit 23 determines a change in the travelling environment on the basis of the acquired change values S1 and S2 by a determination method using a learning model described below (an environmental change determination process: step ST5). When a change in the attitude of the robot body 1A is detected in the attitude change detection process (step ST3), the reliability evaluation unit 26 evaluates the reliability of the change values S1 and S2 at this point in time (a reliability evaluation process: step ST6).

If in the reliability evaluation process (step ST6), it is judged that the change values S1 and S2 are not reliable (NO in step ST6), the control means 2 returns to the first distance detection process (step ST1) to repeat the above-mentioned steps ST1 to ST6. If in the reliability evaluation process (step ST6), it is judged that the change values S1 and S2 are reliable (YES in step ST6), the control means 2 executes the next step ST8. In other words, the distance change comparison unit 24 calculates the difference value S3 obtained by taking a difference between the first change value S1 and the second change value S2 (a distance change comparison process: step ST8). Next, the distance change distinguishing unit 25 distinguishes between changes in the distances caused by a change in the attitude of the mobile robot 1 and changes in the distances caused by the shape of the floor surface F, on the basis of the difference value S3 (a distance change distinguishing process: step ST9), and then returns to the first distance detection process (step ST1).

In the embodiment, the environmental change determination process in step ST5 is executed before the distance change distinguishing process in step ST9, but may be executed after the distance change distinguishing process. In this case, it may be configured in such a manner as to execute the environmental change determination process only when the distance change distinguishing unit 25 determines that the changes are not changes in the distances caused by a change in the attitude of the mobile robot 1 but changes in the distances caused by the shape of the floor surface F.

The travel information of the mobile robot 1 is processed as described above. As a result, the control means 2 causes the travel means 4 to cause the robot body 1A to travel while always determining whether or not the floor surface F ahead in the travel direction D1 of the robot body 1A is flat and travelable, or whether or not, for example, irregularities and an obstacle (the object M) are present on the floor surface F ahead in the travel direction D1 of the robot body 1A. If an obstacle (the object M) is present on the floor surface F ahead in the travel direction D1 of the robot body 1A, the height of the object M from the floor surface F is also determined. Accordingly, the control means 2 determines whether or not it is possible to climb over the object M. If it is determined that it is not possible to climb over the object M, the control means 2 causes the travel control unit 21 to control the drive of the travel means 4 in such a manner as to avoid the object M. If it is determined that it is possible to climb over the object M without adjusting the height of the robot body 1A, the control means 2 causes the travel control unit 21 to continue controlling the drive of the travel means 4 to climb over the object M.

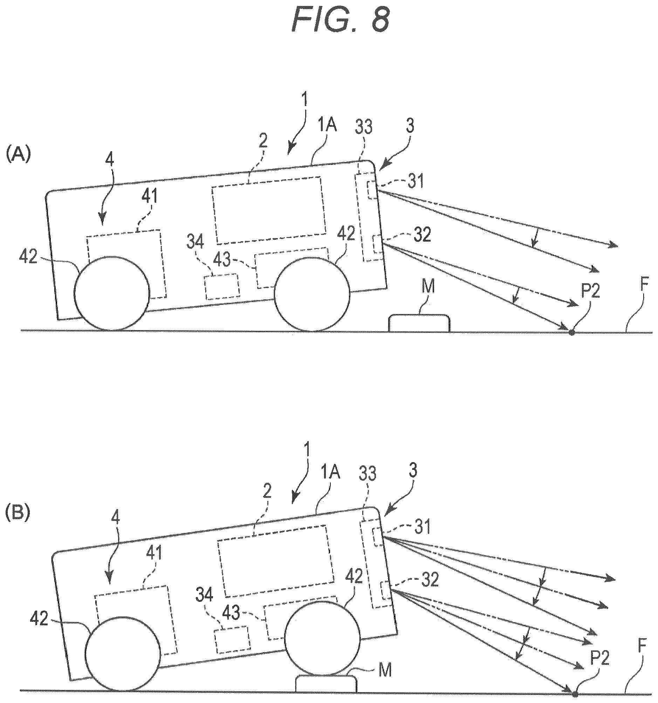

On the other hand, if it is determined that it is possible to climb over the object M with the adjustment of the height of the robot body 1A, the control means 2 causes the travel control unit 21 to control the drive of the height adjustment unit 43 to displace the front left and right wheels 42 downward as illustrated in Fig. 8(A). Accordingly, the height of the robot body 1A on the front side is increased. Figs. 8(A) and 8(B) are diagrams illustrating a height adjustment operation of the mobile robot. As illustrated in Fig. 8(A), the height adjustment unit 43 increases the height of the robot body 1A on the front side, which leads to a change in the attitude of the robot body 1A. As a result, the directions of the first distance sensors 31 and the second distance sensors 32 are changed. When the attitude detection means 34 detects the change in the attitude, the control means 2 causes the detection control unit 22 to control the drive of the sensor direction changing unit 33 to change the directions of the first distance sensors 31 and the second distance sensors 32 downwards. Moreover, when the front wheels 42 ride over the object M and the attitude of the robot body 1A changes further as illustrated in Fig. 8(B), the sensor direction changing unit 33 changes the directions of the first distance sensors 31 and the second distance sensor 32 further downward on the basis of the detection of the attitude detection means 34 under the control of the detection control unit 22.

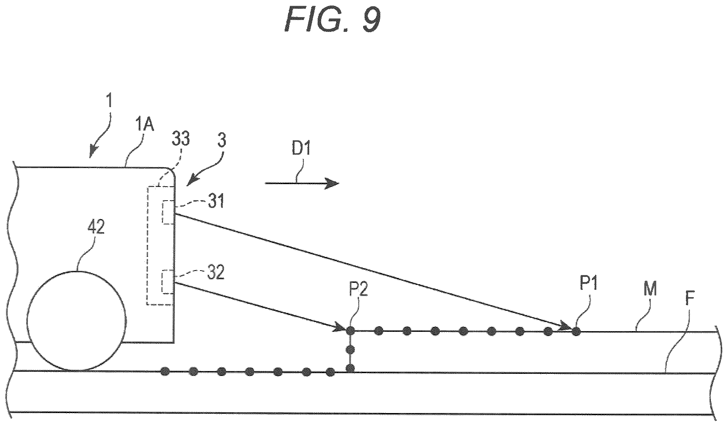

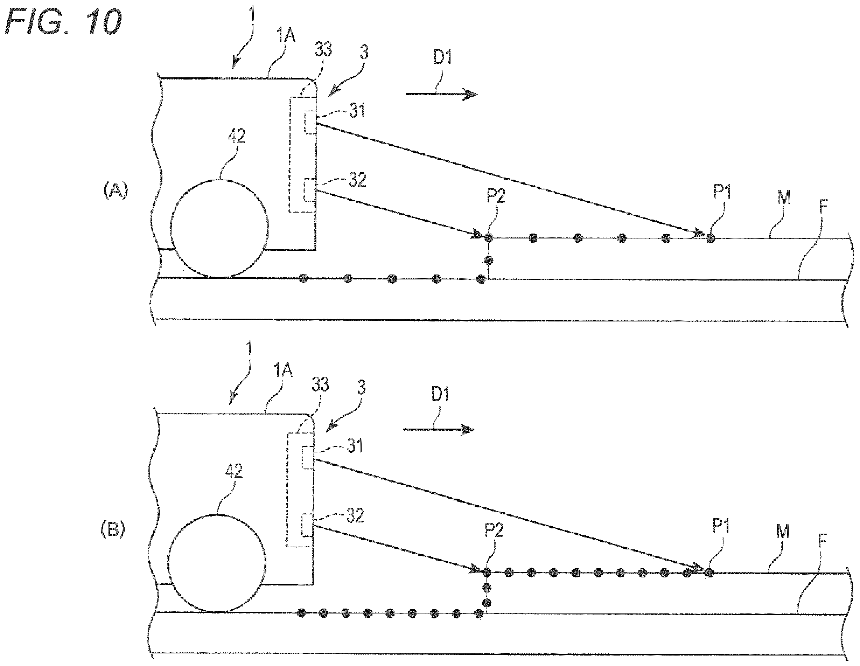

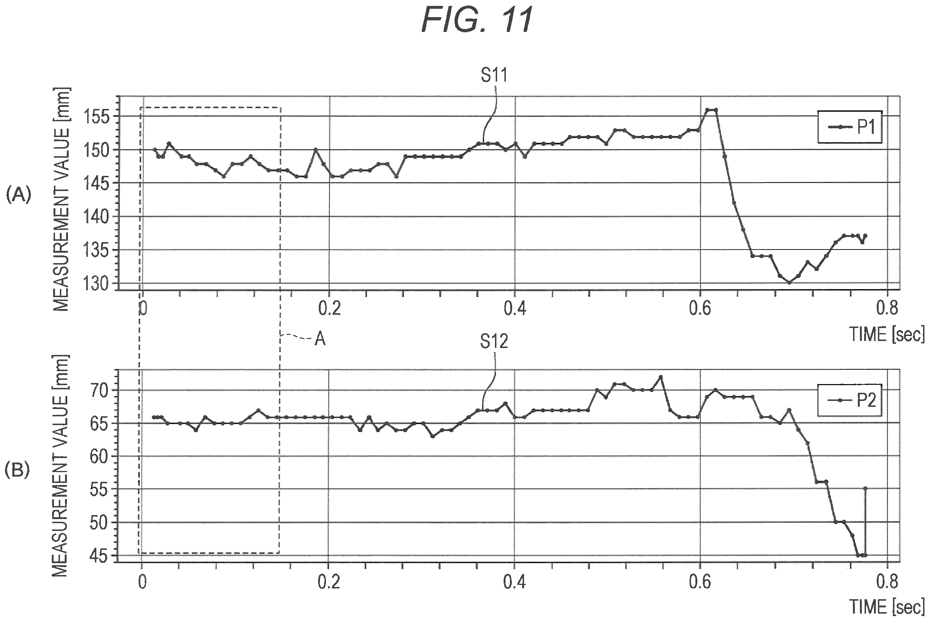

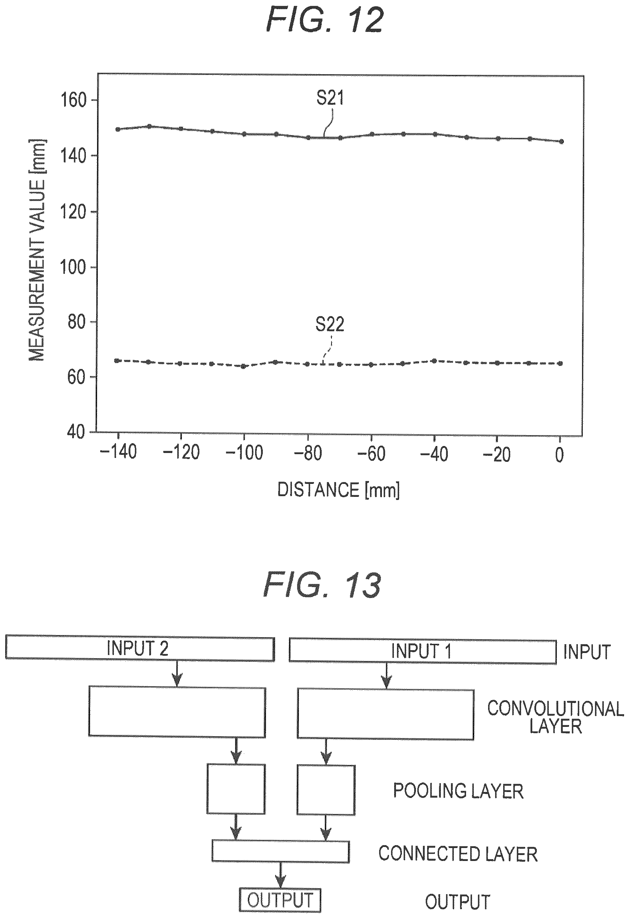

Next, a method by the information processing apparatus 5 for determining a change in the travelling environment (the presence or absence of, for example, a level difference, irregularities, and the object M being an obstacle on the floor surface F) is described in detail also with reference to Figs. 9 to 13. Fig. 9 and Figs. 10(A) and 10(B) are conceptual diagrams illustrating the measurement operation of the mobile robot. Fig. 10(A) illustrates a case where the travel speed of the mobile robot is higher than a case of Fig. 9. Fig. 10(B) illustrates a case where the travel speed of the mobile robot is lower than the case of Fig. 9. Figs. 11(A) and 11(B) are graphs illustrating first measurement value groups obtained by the measurement operation of the mobile robot. Fig. 12 is a graph illustrating second measurement value groups generated by processing the first measurement value groups. Fig. 13 is a diagram illustrating a procedure for comparing the second measurement value groups and determining a change in the environment. The control means 2 of the information processing apparatus 5 functions as a determination means that determines a change in the travelling environment.

As illustrated in Fig. 9 and Figs. 10(A) and 10(B), with the travel of the mobile robot 1, the first distance sensor 31 detects the distance to the first position P1 on the floor surface F ahead in the travel direction D1 of the robot body 1A, and the second distance sensor 32 detects the distance to the second position P2 on the floor surface F ahead in the travel direction D1. The first and second distance sensors 31 and 32 detect the distance substantially simultaneously and continuously at intervals of a predetermined time (for example, at intervals of 0.01 seconds). The distances to the first position P1 detected by the first distance sensor 31 and the distances to the second position P2 detected by the second distance sensor 32 are stored in the storage unit 27 as two (a plurality of) first measurement value groups S11 and S12, each of which is continuous sample data (refer to Figs. 11(A) and 11(B)), respectively. If the travel speed of the mobile robot 1 is higher than the case of Fig. 9, the intervals of the first measurement groups S11 and S12 are increased as illustrated in Fig. 10(A). If the travel speed of the mobile robot 1 is lower than the case of Fig. 9, the intervals of the first measurement value groups S11 and S12 are reduced as illustrated in Fig. 10(B).

Fig. 11(A) illustrates the first measurement value group S11 being the measurement values of the distances to the first position P1 detected by the first distance sensor 31. Fig. 11(B) illustrates the first measurement value group S12 being the measurement values of the distances to the second position P2 detected by the second distance sensor 32. As illustrated in Fig. 11(A), the distance to the first position P1 (the first measurement value group S11) reads a substantially fixed value in the neighborhood of 150 mm up to around a measurement time of 0.6 seconds, and is suddenly reduced after 0.6 seconds, which signifies that the first position P1 has reached the object M. As illustrated in Fig. 11(B), the distance to the second position P2 (the first measurement value group S12) reads a substantially fixed value in the neighborhood of 65 to 70 mm up to around a measurement time of 0.7 seconds, and is suddenly reduced after 0.7 seconds, which signifies that the second position P2 has reached the object M.

The control means 2 processes the two first measurement value groups S11 and S12 obtained at the predetermined time intervals as described above, and generates two second measurement value groups S21 and S22 according to the travel distance of the mobile robot 1 (for example, at intervals of 10 mm). Specifically, measurement values in a predetermined time range (for example, a range indicated with A in Figs. 11(A) and 11(B)) are taken out from the past first measurement value groups S11 and S12 stored in the storage unit 27. The first measurement value groups S11 and S12 taken out are converted into measurement values per travel distance of the mobile robot 1 to generate the two second measurement value groups S21 and S22 as illustrated in Fig. 12. The range of a past predetermined time for taking out the first measurement value groups S11 and S12 is, for example, a range where the travel distance of the mobile robot 1 reaches 150 mm in the period of time.

In Fig. 12, a solid line indicates the second measurement value group S21 generated from the measurement values of the distances to the first position P1, and a broken line indicates the second measurement value group S22 generated from the measurement values of the distances to the second position P2. When the second measurement value groups S21 and S22 are generated in this manner, the control means 2 detects the travel distance in advance from, for example, the number of rotations of the wheel 42 of the mobile robot 1, interpolates the first measurement value groups S11 and S12 on the basis of the measured distance values, and then generates the second measurement value groups S21 and S22. Specifically, a travel distance is assigned to the time when each measurement value of the first measurement value groups S11 and S12 is measured, and linear interpolations are performed between the measurement values to correspond to the travel distances, and the measurement values are resampled on a travel distance basis to generate the second measurement value groups S21 and S22. The first measurement value groups S11 and S12 are interpolated and resampled in this manner. Accordingly, even if the intervals of the first measurement value groups S11 and S12 vary due to, for example, a change in the travel speed of the mobile robot 1, the influence of the variations in the second measurement value groups S21 and S22 according to the travel distance can be prevented.

In the embodiment, linear interpolations are performed between the measurement values to correspond to the travel distances. However, another interpolation method may be employed.

The control means 2 generates the two second measurement value groups S21 and S22 according to the travel distance of the mobile robot 1 in the above manner, and then determines the presence or absence of a change in the travelling environment by use of a learning model, taking the two second measurement value groups S21 and S22 as input values. Specifically, as illustrated in Fig. 13, the control means 2 takes the two second measurement value groups S21 and S22 as inputs 1 and 2, and determines the presence or absence of a change in the travelling environment by use of a neural network that includes a convolutional layer, a pooling layer, and a connected layer, and outputs the presence or absence of a change in the travelling environment. The inputted two second measurement value groups S21 and S22 undergo a convolutional process with a filter having a predetermined weighting factor in the convolutional layer. Features thereof are extracted and the amount of data is reduced. The two second measurement value groups S21 and S22 are then outputted to the pooling layer. Furthermore, in the pooling layer, the two second measurement value groups S21 and S22 undergo a reduction process with a filter having a predetermined weighting factor while maintaining the features, and then are outputted to the connected layer. In the connected layer, the features of the second measurement value groups S21 and S22 outputted from the pooling layer are superimposed and compared to output a comparison result. The learning model determines the presence or absence of a change in the travelling environment on the basis of the comparison result. A deep leaning model with a plurality of middle layers including a convolutional layer, a pooling layer, and a connected layer, or another appropriate learning model, may be employed as the learning model.

In the learning model described above, the weighting factor used in each layer is set by pre-training. The learning is executed in an environment having environmental changes such as level differences, irregularities, and obstacles. The process of inputting the second measurement value groups S21 and S22 generated as described above into the learning model to obtain an output (the presence or absence of a change in the environment), and teaching whether or not the obtained output matches an actual change in the environment is repeated. The input and the output, and the teaching for the output are performed in this manner. Accordingly, the learning model itself changes the weighting factor, and repeats learning until the weighting factor becomes appropriate. The weighting factor obtained as a result of such repeated learning is stored as a practical value in the storage unit 27 to be used for actual operation of the mobile robot 1.

Such an embodiment can exert the following operations and effects:
(1) The control means 2 being the determination means of the mobile robot 1 processes the two first measurement value groups S11 and S12 detected at intervals of the predetermined time, generates the two second measurement value groups S21 and S22, compares the generated second measurement value groups S21 and S22 according to the travel distance of the mobile robot 1, and determines a change in the environment (the presence or absence of, for example, a level difference, irregularities, and the object M being an obstacle on the floor surface F). Accordingly, it is possible to reduce the influence of, for example, the travel speed of the mobile robot 1, and increase the accuracy of detecting a change in the environment.
(2) The control means 2 being the determination means performs interpolations between the measurement values of the first measurement value groups S11 and S12 on the basis of measured distance values detected from, for example, the number of rotations of the wheel 42 of the mobile robot 1, and also resamples the measurement values into values per travel distance to generate the second measurement value groups S21 and S22. Accordingly, it is possible to obtain the second measurement value groups S21 and S22 where the positions of the mobile robot 1 that moves in the environment are appropriately reflected, and to further increase the accuracy of detecting a change in the environment.
(3) The control means 2 being the determination means obtains the presence or absence of a change in the environment as an output on the basis of the learning model where the weighting factors are preset by learning and accordingly can support various environmental change patterns. Moreover, the second measurement value groups S21 and S22 have a higher affinity for the learning model than the first measurement value groups S11 and S12 influenced by, for example, the travel speed of the mobile robot 1. The control means 2 inputs the second measurement value groups S21 and S22 into the learning model and obtains the presence or absence of a change in the environment as an output. Accordingly, it is possible to obtain an excellent determination result as compared to a case where the first measurement value groups S11 and S12 are directly inputted into the learning model to obtain the presence or absence of a change in the environment as an output.
(4) The control means 2 of the mobile robot 1 can cause the distance change distinguishing unit 25 to distinguish between changes in the distances caused by a change in the attitude of the robot body 1A (changes in the same phase) and changes in the distances caused by the shape of the floor surface F in the environment (changes having a phase difference), and correctly detect target objects such as irregularities and obstacles on the basis of changes in the distances caused by the shape of the floor surface F, excluding changes in the distances caused by a change in the attitude of the robot body 1A. Therefore, it is possible to reduce the influence of a change in the attitude of the robot body 1A on distance measurement and increase the accuracy of measuring the distance to a target object such as irregularities or an obstacle, which is present on the floor surface F.
(5) The first distance sensors 31 and the second distance sensors 32 detect distances to the pluralities of the first positions P1 and the second positions P2 along the intersection direction D2 intersecting with the travel direction D1 of the robot body 1A. Accordingly, it is possible to detect changes in the distances caused by the shape of the floor surface F in a width matching the robot body 1A.
(6) The second distance sensor 32 has lower resolution than the first distance sensor 31. Accordingly, when the distance to the second position P2 at a position closer to the robot body 1A along the travel direction D1 than the first position P1 is detected, it is possible to maintain balance with a change in the distance to the first position P1 detected by the first distance sensor 31. Hence, the distance change distinguishing unit 25 can facilitate distinguishing between changes in the distances caused by a change in the attitude of the robot body 1A and changes in the distances caused by the shape of the floor surface F.
(7) The distance change comparison unit 24 determines whether or not to compare changes in the distances to the first position P1 and the second position P2, which are acquired by the distance change acquisition unit 23, on the basis of the evaluation result of the reliability evaluation unit 26. Accordingly, it is possible not to compare changes in the distances to the first position P1 and the second position P2, which have low reliability, and to reduce the computational cost.
(8) The control means 2 causes the sensor direction changing unit 33 to change the directions of the first distance sensors 31 and the second distance sensors 32, on the basis of a change in the attitude of the robot body 1A detected by the attitude detection means 34, and enables the detection of the distance to the floor surface F in a predetermined direction. Accordingly, it is possible to ensure the detection of the distance to the floor surface F in the environment even if the attitude of the robot body 1A changes.

### [Modifications of Embodiment]

The present invention is not limited to the above embodiment, and includes modifications, improvements, and the like within the scope that can achieve the object of the present invention.

For example, in the above embodiment, a specific example of the mobile robot 1 is not illustrated. However, examples of the mobile robot include a service robot and a home robot, or more specifically, a cleaning robot, a security robot, a transport robot, and a guide robot. Furthermore, the travel area of the mobile unit is not limited to a two-dimensional flat space, and may be a three-dimensional space. In this case, the mobile unit may be a flying object such as a drone. Moreover, the predetermined surface in the environment is not limited to a horizontal surface such as the floor surface F, and may be a flat surface such as a vertical surface or inclined surface, or an appropriate curved surface.

In the above embodiment, the control means 2 and the detection means 3, which configure the information processing apparatus 5, are provided to the robot body 1A being the mobile unit. However, a part of or the entire control means 2 may be provided not to the robot body 1A but to another device that can communicate with the robot body 1A, and the other device may configure a part or all of the functions of the control means 2. Moreover, the information processing apparatus of the present invention can also be used for the application of processing the travel information of the mobile unit such as a self-driving vehicle, a service vehicle, or a flying object other then being applied to the mobile robot 1. Moreover, the mobile unit is not limited to one including the travel means 4 as in the mobile robot 1, and may be a trolley that is moved by, for example, another apparatus or a person.

In the above embodiment, the control means 2 being the determination means distinguishes changes in the environment with the learning model. However, thresholds obtained by converting environmental change patterns into a numerical form may be preset without using the learning model.

In the above embodiment, the control means 2 performs interpolations between the measurement values of the first measurement value groups S11 and S12 on the basis of the measured distance values detected from, for example, the number of rotations of the wheel 42 of the mobile robot 1, and also resamples the measurement values into values per travel distance and generates the second measurement value groups S21 and S22. However, a method different from the embodiment may be employed as long as it is possible to process a plurality of the first measurement value groups and generate a plurality of the second measurement value groups according to the travel distance of the mobile unit.

In the above embodiment, it is configured in such a manner that the distance change comparison unit 24 determines whether or not to compare the changes in the distances to the first position P1 and the second position P2 acquired by the distance change acquisition unit 23, on the basis of the evaluation result of the reliability evaluation unit 26, and that if the reliability is low, the changes in the distances are not compared. However, it may be configured in such a manner as to compare all changes in the distances irrespective of reliability. Moreover, in the above embodiment, the attitude detection means 34 detects a change in the attitude of the robot body 1A, and the sensor direction changing unit 33 changes the directions of the first distance sensors 31 and the second distance sensors 32. However, the attitude detection means 34 and the sensor direction changing unit 33 are not essential configurations to the present invention, and can be omitted as appropriate.

In the above embodiment, the first distance sensor 31 and the second distance sensor 32 include a laser rangefinder that applies a laser beam and measures the distance. However, the distance sensor is not limited to a laser rangefinder and may be an optical sensor such as an infrared sensor or LIDAR (Light Detection and Ranging or Laser Imaging Detection and Ranging), or an ultrasonic sensor, or furthermore an image sensor including a camera and an imaging device. Moreover, in the above embodiment, an acceleration sensor is illustrated as an example of the attitude detection means 34. However, the attitude detection means 34 is not limited to an acceleration sensor, and may be a gyro sensor. Moreover, in the above embodiment, it is configured in such a manner that the attitude detection means 34 detects both of a small change in the attitude due to, for example, the vibration, inclination, or shaking of the robot body 1A and a large change in the attitude of the robot body 1A caused by a change in the height caused by the height adjustment unit 43 or riding over the object M. However, a first attitude detection means that detects small changes in the attitude and a second attitude detection means that detects large changes in the attitude may be configured by different sensors, respectively.

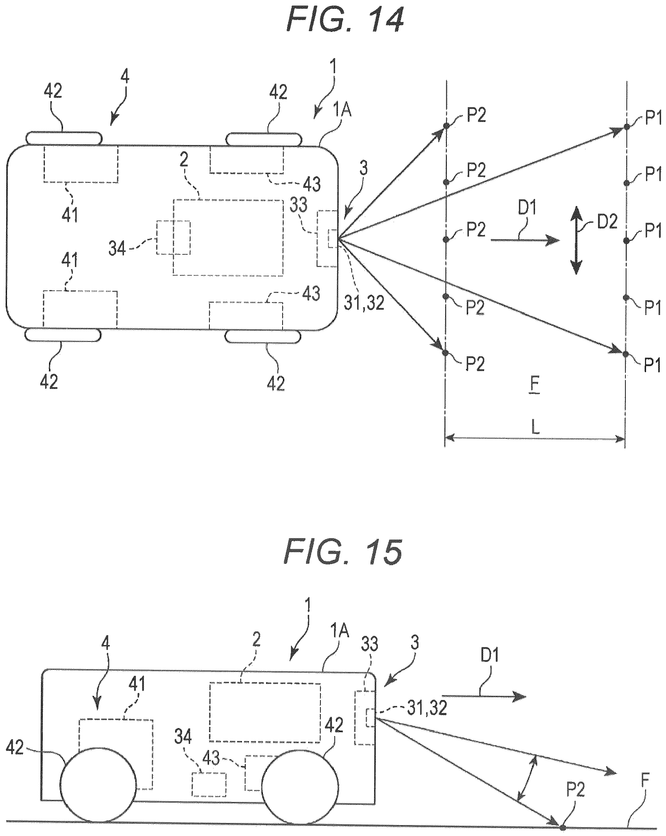

In the above embodiment, the plurality of the first distance sensors 31 and the plurality of the second distance sensors 32 are provided at the front of the robot body 1A. However, the configuration is not limited to this and a configuration such as illustrated in Fig. 14 can be employed. Fig. 14 is a plan view illustrating a modification of the mobile robot. As illustrated in Fig. 14, it is configured in such a manner that one first distance sensor 31 and one second distance sensor 32 are provided to the center at the front of the robot body 1A in such a manner as to be rotatable to the left and right and accordingly detect the distances to the plurality of the first positions P1 and the plurality of the second positions P2 along the intersection direction D2.

In the above embodiment, the first distance sensor 31 and the second distance sensor 32 are configured as separate sensors. However, the configuration is not limited to this and a configuration such as illustrated in Fig. 15 can be employed. Fig. 15 is a side view illustrating another modification of the mobile robot. As illustrated in Fig. 15, it is configured in such a manner that the first distance sensor 31 and the second distance sensor 32 are configured by a single sensor, and that the first position P1 and the second position P2 are identified in accordance with the upward and downward detection areas of the distance sensor 31 and 32. Moreover, it may be configured in such a manner that the single distance sensor 31 and 32 is rotated upward and downward by the sensor direction changing unit 33 to change the detection distance from the robot body 1A and accordingly detect the distances to the first position PI and the second position P2. Moreover, the second distance sensor 32 is not limited to one having lower resolution than the first distance sensor 31, and may be one having the same resolution as the first distance sensor 31, or one having higher resolution than the first distance sensor 31.

### INDUSTRIAL APPLICABILITY

As described above, the present invention can be suitably used for an information processing apparatus and mobile robot that can reduce influence based on a change in the attitude of a mobile unit and increase the accuracy of measuring the distance to a target object.

### LIST OF THE REFERENCE NUMERALS

- 1: Mobile robot
- 1A: Robot body (mobile unit)
- 2: Control means (determination means)
- 3: Detection means
- 4: Travel means
- 5: Information processing apparatus
- 23: Distance change acquisition unit
- 24: Distance change comparison unit
- 25: Distance change distinguishing unit
- 31: First distance sensor
- 32: Second distance sensor
- F: Floor surface (predetermined surface)
- M: Object (change in an environment)
- P1: First position
- P2: Second position
- S11, S12: First measurement value group
- S21, S22: Second measurement value group

## Claims

1. An information processing apparatus that processes travel information of a mobile unit moving in an environment, comprising a determination means configured to determine a change in the environment by:
obtaining a plurality of first measurement value groups obtained by detecting distances to different positions in the environment at intervals of a predetermined time with the travel of the mobile unit; and
processing the plurality of first measurement value groups, generating a plurality of second measurement value groups according to the travel distance of the mobile unit, and comparing the plurality of second measurement value groups generated.

2. The information processing apparatus according to claim 1, wherein the determination means performs interpolations between measurement values of the plurality of first measurement value groups, on the basis of measured distance values obtained by detecting the travel distances of the mobile unit, and resamples the measurement values into values per travel distance to generate the plurality of second measurement value groups.

3. The information processing apparatus according to claim 1 or 2, wherein on the basis of a learning model where a weighting factor is preset by learning, the determination means inputs the plurality of second measurement value groups into the learning model, and obtains the presence or absence of a change in the environment as an output.

4. The information processing apparatus according to claim 3, wherein the determination means compares the plurality of second measurement value groups and executes learning for determining a change in the environment to set the weighting factor for the learning model.

5. A mobile robot comprising:
the information processing apparatus according to any of claims 1 to 4;
a travel means configured to move the mobile unit;
first and second distance sensors configured to detect distances to two different positions in the environment as different positions in the environment; and
a control means configured to control the first and the second distance sensors and function as the determination means, wherein
a second position detected by the second distance sensor is set at a position closer to the mobile unit along a travel direction of the mobile unit than a first position detected by the first distance sensor.

6. The mobile robot according to claim 5, wherein the control means includes:
a distance change acquisition unit configured to acquire changes in the distances to the first and second positions detected by the first and second distance sensors;
a distance change comparison unit configured to compare the changes in the distances to the first and second positions acquired by the distance change acquisition unit; and
a distance change distinguishing unit configured to distinguish between changes in the distances caused by a change in the attitude of the mobile unit and changes in the distances caused by a change in the environment, on the basis of a result of the comparison by the distance change comparison unit.
